(19) Europäisches Patentamt
European Patent Office
Office européen des brevets

(11) **EP 3 406 495 B1**

(12) **FASCICULE DE BREVET EUROPEEN**

(45) Date de publication et mention
de la délivrance du brevet:
**28.08.2019 Bulletin 2019/35**

(51) Int Cl.:
***B60T 1/16*** *(2006.01)*    ***B61H 11/10*** *(2006.01)*

(21) Numéro de dépôt: **18173854.3**

(22) Date de dépôt: **23.05.2018**

(54) **VÉHICULE FERROVIAIRE COMPRENANT UN DISPOSITIF DE FREINAGE AÉRODYNAMIQUE**

SCHIENENFAHRZEUG, DAS EINE AERODYNAMISCHE BREMSVORRICHTUNG UMFASST

RAILWAY VEHICLE COMPRISING AN AERODYNAMIC BRAKING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.05.2017 FR 1754560**

(43) Date de publication de la demande:
**28.11.2018 Bulletin 2018/48**

(73) Titulaire: **ALSTOM Transport Technologies
93400 Saint-Ouen (FR)**

(72) Inventeurs:
• **DELVAL, Damien
59600 ASSEVENT (FR)**
• **JAUNIAUX, Pierre
1340 OTTIGNIES (BE)**

(74) Mandataire: **Lavoix
2, place d'Estienne d'Orves
75441 Paris Cedex 09 (FR)**

(56) Documents cités:
**EP-A1- 2 420 425     CN-U- 202 413 841**

**Description**

La présente invention concerne une voiture de véhicule ferroviaire comprenant un dispositif de freinage aérodynamique. L'invention concerne également un véhicule ferroviaire comprenant un dispositif de freinage aérodynamique.

Les document CN-202413841-U et EP-2420425-A1 portent sur une telle voiture et sur un tel véhicule ferroviaire.

Il existe habituellement différents types de freins dans un véhicule ferroviaire : le frein pneumatique, le frein électropneumatique, le frein électrohydraulique, le frein électromécanique.

Les systèmes de freins actuels agissent directement au niveau des roues du véhicule ou du rail sur lequel le véhicule roule, avec différents degrés de sécurité allant de SIL 0 à SIL 4 (acronyme anglais pour « Safety Integrity Level », ou niveau d'intégrité de sécurité). Les véhicules ferroviaires, et notamment les trains, sont conçus pour transporter des passagers ou du fret. Les freins permettent de réguler la vitesse du train en service, mais ils doivent également assurer l'intégrité de ces passagers ou du fret lors du freinage de service. Tous ces systèmes offrent des avantages différents mais ont également des limites, dont une commune à tous, qui est l'adhérence des roues sur le rail lors du freinage. Les trains roulent de plus en plus vite et il n'est pas rare d'avoir plusieurs systèmes de freinage montés sur un train pour pouvoir le freiner le plus efficacement possible. Toutefois, ceux-ci ne permettent pas aujourd'hui d'avoir un freinage optimum en raison du manque d'adhérence des roues lors du freinage. Il peut aussi y avoir un système additionnel qui permet de moduler l'effort de freinage en cas de perte d'adhérence : l'antienrayeur. Le freinage se trouve alors moins efficace ce qui influe sur les distances d'arrêts, créant un risque pour la sécurité des personnes ou des biens transportés. Les trains sont aussi de plus en plus nombreux sur les voies, demandant de réduire davantage la distance de freinage.

Il existe donc un besoin pour un dispositif de freinage améliorant l'efficacité des systèmes de freinage en place et la sécurité des personnes ou des biens transportés.

A cet effet, l'invention propose une voiture de véhicule ferroviaire comprenant un dispositif de freinage aérodynamique, la voiture s'étendant suivant une direction longitudinale et s'élevant suivant une direction d'élévation perpendiculaire à la direction longitudinale, la voiture comportant une cabine de pilotage située à une première extrémité longitudinale de la voiture et délimitée dans la direction d'élévation par une partie supérieure, le dispositif de freinage aérodynamique comprenant au moins un carénage de déviation d'air monté sur la partie supérieure de la cabine de pilotage, dans lequel le carénage de déviation d'air comprend des parois délimitant un volume intérieur et une ouverture d'accès au volume intérieur, l'une des parois formant une surface frontale orientée vers le volume intérieur et vers la première extrémité longitudinale, le carénage de déviation d'air comprenant, en outre, une trappe couvrant l'ouverture d'accès, la trappe étant mobile par rapport audit carénage de déviation d'air entre une position ouverte dans laquelle la surface frontale du carénage de déviation d'air est exposée pour créer une traînée aérodynamique lorsque le freinage est souhaité et une position fermée dans laquelle la surface frontale est masquée pour réduire la traînée lorsque le freinage n'est pas souhaité.

Sans frein aérodynamique, l'effort de freinage est proportionnel à la masse du véhicule ferroviaire. L'invention permet d'une part d'augmenter le frottement longitudinal et le coefficient de trainée en augmentant la surface de frottement suivant la formule ci-dessous :

$$F_x = \frac{1}{2}\rho S C_x V^2$$

Avec :

Fx la force de frottement longitudinale,
$\rho$ la masse volumique de l'air,
V la vitesse du véhicule,
S la surface de référence,
Cx le coefficient de traînée.

L'invention permet également, en dirigeant le flux d'air de façon spécifique, d'augmenter l'adhérence des roues en augmentant l'effort appliqué à un essieu sur lequel les roues sont montées par la diminution de la portance verticale suivant la formule ci-dessous :

$$F_z = \frac{1}{2}\rho S V^2 C_z$$

Avec :

Fz la portance verticale,
p la masse volumique de l'air,
V la vitesse du véhicule,
S la surface de référence,
Cz le coefficient de portance.

Les systèmes de freins conventionnels pourront alors être utilisés plus efficacement diminuant ainsi la distance de freinage. Le système de frein aérodynamique est d'autant plus efficace que les trains roulent vite, l'effort de trainée étant proportionnel au carré de la vitesse du train.

Une voiture de véhicule ferroviaire selon l'invention peut comporter en outre l'une ou plusieurs des caractéristiques suivantes, prises seules ou selon toutes combinaisons techniquement envisageables.

- La trappe est mobile en rotation autour d'un axe transversal perpendiculaire aux directions longitudinale et d'élévation de la voiture.
- La surface frontale forme un angle avec la partie supérieure compris entre 90° et 150°.

L'invention concerne également un véhicule ferroviaire comprenant un dispositif de freinage aérodynamique, le véhicule ferroviaire s'étendant suivant une direction longitudinale et s'élevant suivant une direction d'élévation perpendiculaire à la direction longitudinale, le véhicule étant formé d'un attelage d'une pluralité de voitures comprenant chacune un toit et parmi lesquelles au moins une voiture est une voiture telle que définie ci-dessus,

dans lequel au moins une voiture comporte au moins un panneau monté sur le toit de cette voiture, chaque panneau présentant une surface dite surface de freinage, chaque panneau étant mobile entre une position relevée dans laquelle la surface de freinage du panneau est exposée pour créer une traînée aérodynamique lorsque le freinage est souhaité et une position abaissée dans laquelle le panneau est escamoté pour réduire la traînée lorsque le freinage n'est pas souhaité.

Un véhicule ferroviaire selon l'invention peut comporter en outre l'une ou plusieurs des caractéristiques suivantes, prises seules ou selon toutes combinaisons techniquement envisageables.

- Chaque panneau est mobile en rotation autour d'un axe transversal perpendiculaire aux directions longitudinale et d'élévation de la voiture.
- La surface de freinage de chaque panneau, en position relevée, forme un angle avec le toit de la voiture compris entre 95° et 170°.
- Chaque voiture comprend une pluralité de panneaux comportant des premiers panneaux et des seconds panneaux distincts des premiers panneaux, les premiers panneaux étant destinés à être utilisés dans un premier sens de circulation du véhicule ferroviaire, et les seconds panneaux étant destinés à être utilisés dans un second sens de circulation différent du premier sens de circulation du véhicule ferroviaire.
- Le dispositif de freinage aérodynamique comprend, en outre, un mécanisme d'actionnement associé de manière opérationnelle à la trappe pour ouvrir et fermer la trappe, et une unité de contrôle/commande du mécanisme d'actionnement de la trappe, l'unité de contrôle/commande étant apte à transmettre un signal au mécanisme d'actionnement indiquant le désir de freinage du véhicule.
- Le dispositif de freinage aérodynamique comprend, en outre, un mécanisme d'actionnement associé de manière opérationnelle aux panneaux pour relever et abaisser les panneaux, et une unité de contrôle/commande du mécanisme d'actionnement des panneaux, l'unité de contrôle/commande étant apte à transmettre un signal au mécanisme d'actionnement indiquant le désir de freinage du véhicule.

L'invention concerne également un procédé comprenant les étapes suivantes :

- déplacement de la voiture dans laquelle la trappe est en position fermée masquant la surface frontale du carénage de déviation d'air,
- passage de la trappe de la position fermée à la position ouverte et exposition de la surface frontale du carénage de déviation d'air pour créer une traînée aérodynamique et freiner la voiture.

L'invention sera mieux comprise à la lumière de la description qui va suivre, donnée uniquement à titre d'exemple et faite en se référant aux figures annexées, parmi lesquelles :

- la figure 1 est une vue de côté représentant une partie avant d'une voiture de tête d'un véhicule ferroviaire, équipée d'un dispositif de freinage aérodynamique selon un exemple de mode de réalisation de l'invention,
- la figure 2 est une vue de côté représentant un véhicule ferroviaire équipé d'un dispositif de freinage aérodynamique selon un autre exemple de mode de réalisation de l'invention.

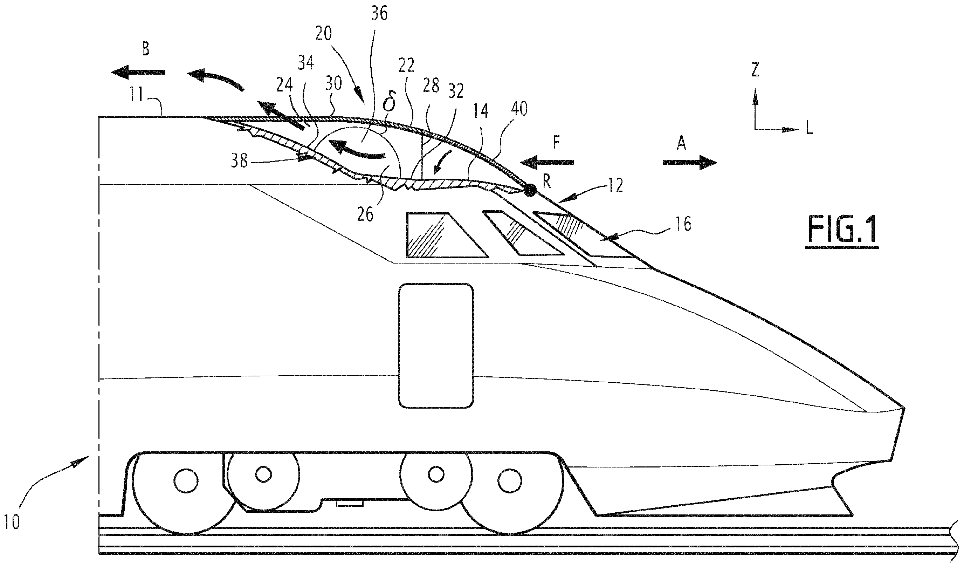

On a représenté, sur la figure 1, une voiture 10 de véhicule ferroviaire. Le véhicule ferroviaire est par exemple un train à grande vitesse.

Dans l'exemple décrit, la voiture 10 est une voiture de tête du véhicule ferroviaire, et par exemple une motrice. La voiture 10 s'étend suivant une direction longitudinale L et s'élève suivant une direction d'élévation Z.

Par la suite, les termes « supérieur », « inférieur », « haut » et «bas» sont définis par rapport à la direction d'élévation Z.

La voiture 10 comporte un toit 11.

La voiture 10 comporte une cabine de pilotage 12 comme connu en soi. La cabine de pilotage 12 est délimitée selon la direction d'élévation Z par une partie supérieure 14. La cabine de pilotage 12 est située à une première extrémité longitudinale 16 de la voiture 10. Cette première extrémité longitudinale 16 est appelée « avant » 16 de la voiture 10 dans la suite de la description. La voiture comporte un arrière B opposé à l'avant 16 suivant la direction longitudinale L.

L'avant 16 présente une forme profilée aérodynamique de manière à augmenter l'aérodynamisme de la voiture 10.

Sur la figure 1, il est supposé que la voiture 10 roule dans le sens de circulation indiqué par la flèche A.

La voiture 10 comprend un dispositif de freinage aérodynamique 20.

La voiture 10 comprend en outre au moins un système de freinage classique choisi parmi un frein pneumatique, un frein électropneumatique, un frein électrohydraulique et un frein électromécanique.

Le dispositif de freinage aérodynamique 20 comprend un carénage de déviation d'air 22, appelé par la suite carénage 22.

Le carénage 22 est monté sur la partie supérieure 14 de la cabine de pilotage 12. Le carénage 22 comprend des parois 24. Les parois 24 sont réalisées en métal. En variante, les parois 24 sont réalisées en composite, matière synthétique ou tout autre matériau adapté.

Les parois 24 délimitent un volume intérieur 26 et une ouverture d'accès 28 au volume intérieur 26, située à l'avant de ce volume intérieur 26.

Les parois 24 délimitent une partie supérieure 30, une partie inférieure 32, une partie arrière 34 et deux parties latérales 36. Selon un mode de réalisation, la partie supérieure 30 et les parties latérales 36 sont venues de matière. En variante, la partie supérieure 30 et les parties latérales 36 sont des panneaux distincts.

La partie supérieure 30 du carénage 22 est sensiblement parallèle à la direction longitudinale L, et située dans le prolongement du toit 11.

Selon l'exemple de la figure 1, la partie inférieure 32 du carénage 22 est formée d'au moins une partie de la partie supérieure 14 de la cabine de pilotage 12.

L'une des parois 24 forme une surface frontale 38 orientée vers le volume intérieur 26 et vers l'avant de la voiture 10. Dans l'exemple décrit, la surface frontale 38 est formée par la partie arrière 34 du carénage 22.

De préférence, la surface frontale 38 forme un angle $\delta$ avec la partie inférieure 32 du carénage 22 compris entre 90° et 170°, plus particulièrement entre 90° et 150°, plus particulièrement entre 95° et 150°.

Le carénage 22 comprend en outre une trappe 40 couvrant l'ouverture d'accès 28. La trappe 40 est par exemple réalisée en métal. En variante, la trappe 40 est réalisée en plastique ou tout autre matériau adapté.

La trappe 40 est mobile par rapport au carénage 22 entre une position ouverte dans laquelle la surface frontale est exposée et une position fermée dans laquelle la surface frontale est masquée. Sur la figure 1, la trappe 40 est en position fermée.

En position fermée, le carénage 22 avec la trappe 40 présente une forme profilée aérodynamique.

En position ouverte, la trappe 40 est sensiblement parallèle à la direction longitudinale L. Ainsi, la prise d'air est maximale.

Selon l'exemple décrit, la trappe 40 est mobile en rotation autour d'un axe R transversal perpendiculaire aux directions longitudinale L et d'élévation Z de la voiture 10. La trappe 40 est reliée à la partie supérieure 14 de la cabine de pilotage 12 ou aux parties latérales 36 du carénage 22. La trappe 40 est par exemple reliée au moyen d'une liaison pivot configurée pour permettre la rotation de la trappe 40 autour de son axe R.

Ainsi, en-dehors d'un freinage, la trappe 40 est en position fermée. Un flux d'air F circule le long de la trappe 40, puis le long de la partie supérieure 30 du carénage 22, puis le long du toit 11, vers l'arrière B de la voiture 10.

Lors d'un freinage utilisant le dispositif de freinage aérodynamique 20, la trappe 40 est en position ouverte. Le flux d'air F pénètre par l'ouverture d'accès 28 dans le volume intérieur 26 du carénage 22 puis est dévié par la surface frontale 38 vers le haut et vers l'arrière B de la voiture 10.

Cette déviation du flux d'air F engendre une augmentation de la traînée aérodynamique et augmente la charge à l'essieu lors du freinage.

Avantageusement, le dispositif de freinage 20 comprend un mécanisme d'actionnement associé de manière opérationnelle à la trappe 40. Le mécanisme d'actionnement ouvre et ferme la trappe 40. Le mécanisme d'actionnement est par exemple électrique. Selon un autre exemple, le mécanisme d'actionnement est pneumatique.

Le dispositif de freinage 20 comprend en outre une unité de contrôle/commande du mécanisme d'actionnement de la trappe.

L'unité de contrôle/commande est par exemple à déclenchement manuel. Selon un autre exemple, l'unité de contrôle/commande est à déclenchement automatique.

L'unité de contrôle/commande est apte à transmettre un signal au mécanisme d'actionnement indiquant le désir de freinage du véhicule ferroviaire. Le freinage est un freinage de service ou un freinage d'urgence. L'unité de contrôle/commande est par exemple liée à une commande de freinage classique du véhicule.

Dans le cas d'un déclenchement automatique, l'unité de contrôle commande comprend par exemple un détecteur de vitesse et transmet un signal au mécanisme d'actionnement de la trappe 40 lorsque la vitesse de la voiture 10 est supérieure ou égale à une valeur seuil prédéterminée. Alternativement ou en outre, l'unité de contrôle/commande comprend un détecteur d'obstacle et transmet un signal au mécanisme d'actionnement de la trappe 40 lorsqu'un obstacle est détecté.

Ce signal a pour effet d'ouvrir la trappe pour exposer la surface frontale du carénage. L'unité de contrôle/commande est également apte à transmettre un signal au mécanisme d'actionnement lorsque le freinage n'est pas souhaité. Ce signal a pour effet de fermer la trappe 40 pour masquer la surface frontale 38 du carénage 22.

Selon un mode de réalisation avantageux, le mécanisme d'actionnement de la trappe 40 est apte à ouvrir la trappe 40 suivant une inclinaison comprise entre la position fermée de la trappe 40 et la position ouverte de la trappe. Plus un freinage rapide est souhaité, par exemple lors d'un freinage d'urgence, et plus l'inclinaison de la trappe 40 est proche de la position ouverte de la trappe 40.

Cela permet d'adapter le coefficient de traînée en fonction de la force de freinage souhaitée.

Un procédé de freinage aérodynamique pour une telle voiture 10 de véhicule ferroviaire va maintenant être décrit.

Avant le freinage, la voiture 10 roule à une vitesse donnée. La trappe 40 est en position fermée masquant la surface frontale 38 du carénage 22.

Puis le freinage aérodynamique est souhaité.

L'unité de contrôle/commande du mécanisme d'actionnement de la trappe 40 est déclenchée. L'unité de contrôle/commande transmet un signal au mécanisme d'actionnement de la trappe 40.

Le mécanisme d'actionnement ouvre la trappe 40 passant de sa position fermée à sa position ouverte et exposant la surface frontale 38 du carénage 22.

Le flux d'air F pénètre dans le volume intérieur 26 du carénage 22.

La voiture 10 est alors freinée.

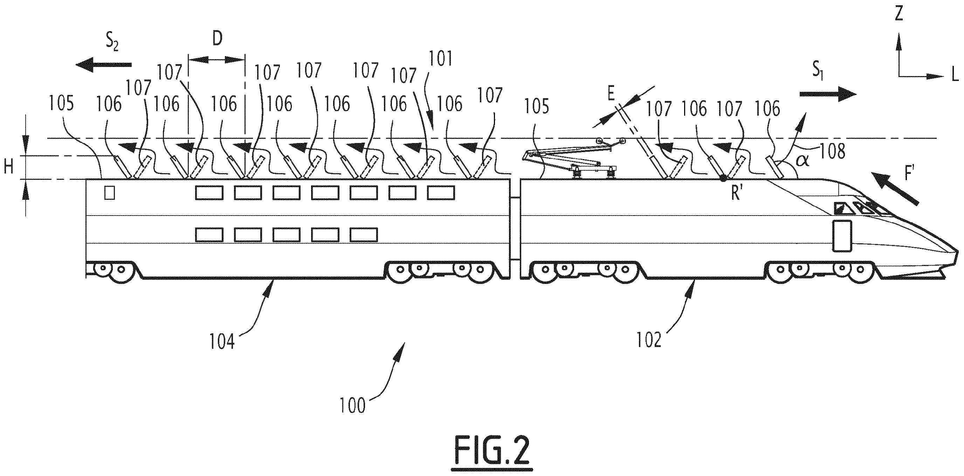

On a représenté sur la figure 2 un véhicule ferroviaire 100 comprenant un dispositif de freinage aérodynamique 101 pour illustrer un autre mode de réalisation de l'invention combiné au mode de réalisation précédemment décrit.

Selon l'exemple décrit, le véhicule ferroviaire 100 est un train à grande vitesse s'étendant suivant une direction longitudinale L et s'élevant suivant une direction d'élévation Z. Le véhicule ferroviaire 100 est formé d'un attelage d'une pluralité de voitures ferroviaires 102, 104. Au moins une voiture 102 est une motrice correspondant à la voiture 10 décrite ci-dessus, et comprend un carénage de déviation d'air tel que décrit ci-dessus. Les autres voitures 104 sont destinées au transport de passagers ou de marchandise.

Chaque voiture 102, 104 comprend un toit 105.

Chaque voiture 102, 104 comporte au moins un panneau 106 monté sur le toit 105 de cette voiture. Chaque panneau 106 est par exemple réalisé en métal. En variante, chaque panneau 106 est réalisé en plastique ou tout autre matériau adapté.

Chaque panneau 106 présente une surface 108 dite surface de freinage 108. La surface de freinage 108 est par exemple rectangulaire. La dimension de cette surface de freinage 108 est par exemple comprise entre et 1 mètre carré et 2 mètres carrés. Selon l'exemple décrit, la surface de freinage 108 présente une dimension de 2 mètres * 60 centimètres. Cette dimension est déterminée pour obtenir un freinage le plus efficace possible.

La surface de freinage 108 est par exemple plane. En variante, la surface de freinage 108 est courbée.

Chaque panneau 106 présente une dimension E, dite épaisseur E, prise perpendiculairement à la surface de freinage 108, suffisante à sa tenue mécanique.

Chaque panneau 106 est mobile entre une position relevée dans laquelle la surface de freinage 108 du panneau 106 est exposée et une position abaissée dans laquelle le panneau est escamoté. Sur la figure 2, les panneaux 106 sont représentés en position relevée.

La surface de freinage 108 de chaque panneau 106, en position relevée, forme un angle α avec le toit de la voiture 105 compris entre 95° et 170°, en fonction de la vitesse et de l'effort de freinage. L'angle α est variable d'un panneau à l'autre. Ainsi, tous les panneaux ne forment pas nécessairement le même angle α avec le toit de la voiture 105.

En position relevée, les panneaux 106 présentent une dimension H selon la direction d'élévation Z limitée par les gabarits imposés pour les véhicules ferroviaires.

Par exemple, chaque panneau 106 est mobile en rotation autour d'un axe transversal R' perpendiculaire aux directions longitudinale L et d'élévation Z de la voiture 102, 104. Chaque panneau 106 est fixé au toit 105 de la voiture 102, 104 par exemple par une liaison pivot. Cette liaison pivot est configurée pour permettre la rotation du panneau autour de son axe R'. Selon cet exemple, en position abaissée, le panneau 106 est plaqué contre le toit 105 de la voiture 102, 104.

Avantageusement, un renfoncement est prévu pour chaque panneau 106 dans le toit 105 de la voiture 102, 104 de manière à réduire la traînée aérodynamique lorsque le panneau 106 est en position abaissée.

En variante, chaque panneau 106 est mobile en translation entre la position abaissée et la position relevée, auquel cas, en position abaissée, chaque panneau 106 est escamoté dans un logement prévu à cet effet dans le toit 105 de la voiture 102, 104.

Avantageusement, chaque voiture 102, 104 comprend une pluralité de panneaux 106. Par exemple, chaque voiture comprend un nombre n de panneaux 106 inférieur ou égal à 10, n étant un nombre entier. Ce nombre n est dépendant de la longueur de la voiture 102, 104.

Les panneaux 106 sont par exemple alignés suivant un axe longitudinal central du toit 105 de la voiture 102, 104. De préférence, la dimension de la surface de freinage 108 est sensiblement identique d'un panneau 106 à l'autre.

De préférence, les panneaux 106 sont espacés suivant la direction longitudinale L d'une distance D comprise entre et 60 centimètres et 2 mètres.

Cette distance D est déterminée façon à obtenir un freinage le plus efficace possible.

Selon un mode de réalisation avantageux, la pluralité de panneaux 106 comporte des premiers panneaux 106 et des seconds panneaux 107 distincts des premiers panneaux 106.

Les premiers panneaux 106 sont destinés à être utilisés dans un premier sens de circulation S1 du véhicule ferroviaire 100, et les seconds panneaux 107 sont destinés à être utilisés dans un second sens de circulation S2 différent du premier sens de circulation S1 du véhicule ferroviaire 100.

Ainsi, dans le premier sens de circulation S1, les premiers panneaux 106 sont relevés de sorte à former un angle α entre la surface de freinage 108 et le toit 105 de la voiture 102, 104 compris entre 95° et 170°.

Dans le second sens de circulation S2, les seconds panneaux 107 sont relevés de sorte à former un angle entre la surface de freinage et le toit de la voiture compris entre 95° et 170°.

Ainsi, en-dehors d'un freinage, les panneaux 106, 107 sont en position abaissée. Le flux d'air F' est déplacé le long du toit 105 du véhicule ferroviaire 100 vers l'arrière du véhicule 100.

Lors d'un freinage utilisant le dispositif de freinage aérodynamique 101, les panneaux 106 sont en position relevée. Le flux d'air F' est dévié par chaque panneau 106 vers le haut et vers l'arrière du véhicule ferroviaire 100, où l'arrière est opposé au sens de circulation S1 du véhicule ferroviaire 100.

Cette déviation du flux d'air F' engendre une augmentation de la traînée aérodynamique et augmente la charge à l'essieu lors du freinage.

De préférence, le dispositif de freinage aérodynamique 101 comprend un mécanisme d'actionnement associé de manière opérationnelle aux panneaux 106, 107. Le mécanisme d'actionnement relève et abaisse les panneaux 106, 107. Le mécanisme d'actionnement est par exemple électrique. Selon un autre exemple, le mécanisme d'actionnement est pneumatique.

Le dispositif de freinage aérodynamique 101 comprend, en outre, une unité de contrôle/commande du mécanisme d'actionnement des panneaux 106, 107. L'unité de contrôle/commande est par exemple à déclenchement manuel. Selon un autre exemple, l'unité de contrôle/commande est à déclenchement automatique.

L'unité de contrôle/commande est par exemple liée à un système de commande de freinage classique. L'unité de contrôle/commande est apte à transmettre un signal au mécanisme d'actionnement indiquant le désir de freinage du véhicule 100. Le freinage est un freinage de service ou un freinage d'urgence.

Dans le cas d'un déclenchement automatique, l'unité de contrôle commande comprend par exemple un détecteur de vitesse et transmet un signal au mécanisme d'actionnement lorsque la vitesse du véhicule 100 est supérieure ou égale à une valeur seuil prédéterminée. Alternativement ou en outre, l'unité de contrôle/commande comprend un détecteur d'obstacle et transmet un signal au mécanisme d'actionnement de la trappe 40 lorsqu'un obstacle est détecté.

Ce signal a pour effet de relever les panneaux 106 pour exposer la surface de freinage 108 des panneaux 106. L'unité de contrôle/commande est également apte à transmettre un signal au mécanisme d'actionnement lorsque le freinage n'est pas souhaité. Ce signal a pour effet d'abaisser les panneaux 106.

Selon un mode de réalisation avantageux, le mécanisme d'actionnement des panneaux 106 est apte à relever les panneaux 106 suivant une position comprise entre la position abaissée des panneaux 106 et la position relevée des panneaux 106.

Cela permet d'adapter le coefficient de traînée en fonction de la force de freinage souhaitée.

Un procédé de freinage aérodynamique pour un tel véhicule ferroviaire 100 va maintenant être décrit.

Avant le freinage, le véhicule 100 roule à une vitesse donnée. Les panneaux 106 sont en position abaissée masquant la surface de freinage 108 des panneaux 106.

Puis le freinage aérodynamique est souhaité.

L'unité de contrôle/commande du mécanisme d'actionnement des panneaux 106 est déclenchée. L'unité de contrôle/commande transmet un signal au mécanisme d'actionnement des panneaux 106.

Le mécanisme d'actionnement relève les panneaux 106 passant de leur position abaissée à leur position relevée et exposant la surface de freinage 108 des panneaux 106.

Le flux d'air F' est dévié par la surface de freinage 108 des panneaux 106.

Le véhicule 100 est alors freiné.

Le procédé de freinage aérodynamique du véhicule ferroviaire 100 comprend en outre les étapes du procédé de freinage aérodynamique de la voiture 10 décrit précédemment.

Grâce à un tel dispositif de freinage aérodynamique 20, 101, l'efficacité des systèmes de freinage en place est améliorée. La distance de freinage est diminuée et la sécurité des personnes ou des biens transportés est améliorée. En outre, le freinage résultant est écologique et il économise le freinage des roues classique.

## Revendications

1. Voiture (10) de véhicule ferroviaire comprenant un dispositif de freinage aérodynamique (20), la voiture (10) s'étendant suivant une direction longitudinale (L) et s'élevant suivant une direction d'élévation (Z) perpendiculaire à la direction longitudinale (L), la voiture (10) comportant une cabine de pilotage (12) située à une première extrémité longitudinale (16) de la voiture (10) et délimitée dans la direction d'élévation (Z) par une partie supérieure (14), le dispositif de freinage aérodynamique (20) comprenant au moins un carénage de déviation d'air (22) monté sur la partie supérieure (14) de la cabine de pilotage (12), la voiture étant **caractérisée en ce que** le carénage de déviation d'air (22) comprend des parois (24) délimitant un volume intérieur (26) et une ouverture d'accès (28) au volume intérieur (26), l'une des parois (24) formant une surface frontale (38) orientée vers le volume intérieur (26) et vers la première extrémité longitudinale (16), le carénage de déviation d'air (22) comprenant, en outre, une trappe (40) couvrant l'ouverture d'accès (28), la trappe (40) étant mobile par rapport audit carénage de déviation d'air (22) entre une position ouverte dans laquelle la surface frontale (38) du carénage de déviation d'air (22) est exposée pour créer une traînée aérodynamique lorsque le freinage est souhaité et une position fermée dans laquelle la surface frontale (38) est masquée pour réduire la traînée lorsque le freinage n'est pas souhaité.

2. Voiture (10) de véhicule ferroviaire selon la revendication 1, dans laquelle la trappe (40) est mobile en rotation autour d'un axe transversal (R) perpendiculaire aux directions longitudinale (L) et d'élévation (Z) de la voiture (10).

3. Voiture (10) de véhicule ferroviaire selon la revendication 1 ou 2, dans laquelle la surface frontale (38) forme un angle (δ) avec la partie supérieure (14) compris entre 90° et 170°, plus particulièrement entre 90° et 150°, plus particulièrement entre 95° et 150°.

4. Véhicule ferroviaire (100) comprenant un dispositif de freinage aérodynamique (20, 101), le véhicule ferroviaire (100) s'étendant suivant une direction longitudinale (L) et s'élevant suivant une direction d'élévation (Z) perpendiculaire à la direction longitudinale (L), le véhicule étant formé d'un attelage d'une pluralité de voitures (102, 104) comprenant chacune un toit (105) et parmi lesquelles au moins une voiture (102) est une voiture telle que définie selon l'une quelconque des revendications 1 à 3, étant **caractérisée en ce qu'**au moins une voiture (102, 104) comporte au moins un panneau (106) monté sur le toit (105) de cette voiture (102, 104), chaque panneau (106) présentant une surface (108) dite surface de freinage (108), chaque panneau (106) étant mobile entre une position relevée dans laquelle la surface de freinage (108) du panneau (106) est exposée pour créer une traînée aérodynamique lorsque le freinage est souhaité et une position abaissée dans laquelle le panneau (106) est escamoté pour réduire la traînée lorsque le freinage n'est pas souhaité.

5. Véhicule ferroviaire (100) selon la revendication 4, dans lequel chaque panneau (106) est mobile en rotation autour d'un axe transversal (R') perpendiculaire aux directions longitudinale (L) et d'élévation (Z) de la voiture (102, 104).

6. Véhicule ferroviaire (100) selon la revendication 4 ou 5, dans lequel la surface de freinage (108) de chaque panneau (106), en position relevée, forme un angle (α) avec le toit (105) de la voiture (102, 104) compris entre 95° et 170°.

7. Véhicule ferroviaire (100) selon l'une quelconque des revendications 4 à 6, dans lequel chaque voiture (102, 104) comprend une pluralité de panneaux (106, 107) comportant des premiers panneaux (106) et des seconds panneaux (107) distincts des premiers panneaux (106), les premiers panneaux (106) étant destinés à être utilisés dans un premier sens de circulation (S1) du véhicule ferroviaire (100), et les seconds panneaux (107) étant destinés à être utilisés dans un second sens de circulation (S2) différent du premier sens de circulation (S1) du véhicule ferroviaire (100).

8. Véhicule ferroviaire (100) selon l'une quelconque des revendications 4 à 7, dans lequel le dispositif de freinage aérodynamique (20) comprend, en outre, un mécanisme d'actionnement associé de manière opérationnelle à la trappe (40) pour ouvrir et fermer la trappe (40), et une unité de contrôle/commande du mécanisme d'actionnement de la trappe (40), l'unité de contrôle/commande étant apte à transmettre un signal au mécanisme d'actionnement indiquant le désir de freinage du véhicule (100).

9. Véhicule ferroviaire (100) selon l'une quelconque des revendications 4 à 8, dans lequel le dispositif de freinage aérodynamique (101) comprend, en outre, un mécanisme d'actionnement associé de manière opérationnelle aux panneaux (106) pour relever et abaisser les panneaux (106), et une unité de contrôle/commande du mécanisme d'actionnement des panneaux (106), l'unité de contrôle/commande étant apte à transmettre un signal au mécanisme d'actionnement indiquant le désir de freinage du véhicule (100).

10. Procédé de freinage aérodynamique d'une voiture (10) de véhicule ferroviaire selon l'une quelconque des revendications 1 à 3, le procédé étant **caractérisée en ce qu'**il comprend les étapes suivantes :

   - déplacement de la voiture (10) dans laquelle la trappe (40) est en position fermée masquant la surface frontale (38) du carénage de déviation d'air (22),
   - passage de la trappe (40) de la position fermée à la position ouverte et exposition de la surface frontale (38) du carénage de déviation d'air (22) pour créer une traînée aérodynamique et freiner la voiture (10).

**Patentansprüche**

1. Wagen (10) eines Schienenfahrzeugs mit einer aerodynamischen Bremsvorrichtung (20), wobei der Wagen sich gemäß einer Längsrichtung (L) erstreckt und sich gemäß einer Höhenrichtung (Z) senkrecht zur Längsrichtung (L) erhebt, wobei der Wagen (10) eine Steuerkabine (12) aufweist, die an einem ersten Längsende (16) des Fahrzeugs (10) liegt und in der Höhenrichtung (Z) durch ein oberes Teil (14) begrenzt ist, wobei die aerodynamische Bremsvorrichtung (20) mindestens eine Verkleidung (22) zur Luftablenkung umfasst, die an dem oberen Teil (14) der Steuerkabine (12) montiert ist,
wobei der Wagen **dadurch gekennzeichnet ist, dass** die Verkleidung (22) zur Luftablenkung Wände (24), die ein Innenvolumen (26) begrenzen, und eine Öffnung (28) für einen Zugang zum Innenvolumen (26) umfasst, wobei eine der Wände (24) eine Frontseite (38) bildet, die zu dem Innenvolumen (26) und zu dem ersten Längsende (16) gerichtet ist, wobei die Verkleidung (22) zur Luftablenkung außerdem eine Klappe (40) umfasst, die die Zugangsöffnung (28) bedeckt, wobei die Klappe (40) in Bezug auf die Verkleidung (22) zur Luftablenkung zwischen einer Offenstellung, in der die Frontseite (38) der Verkleidung (22) zur Luftablenkung exponiert ist, um einen Luftwiderstand zu erzeugen, wenn das Bremsen gewünscht ist, und einer geschlossenen Stellung beweglich ist, in der die Frontseite (38) verdeckt ist, um den Luftwiderstand zu reduzieren, wenn das Bremsen nicht gewünscht ist.

2. Wagen (10) eines Schienenfahrzeugs nach Anspruch 1, bei dem die Klappe (40) um eine Querachse (R) senkrecht zu der Längsrichtung (L) und der Höhenrichtung (Z) des Fahrzeugs (10) drehbeweglich ist.

3. Wagen (10) eines Schienenfahrzeugs nach Anspruch 1 oder 2, bei dem die Frontseite (38) einen Winkel ($\delta$) mit dem oberen Teil (14) bildet, der zwischen 90° und 170°, insbesondere zwischen 90° und 150°, noch spezifischer zwischen 95° und 150° liegt.

4. Schienenfahrzeug (100) mit einer aerodynamischen Bremsvorrichtung (20, 101), wobei das Schienenfahrzeug (100) sich gemäß einer Längsrichtung (L) erstreckt und sich gemäß einer Höhenrichtung (Z) senkrecht zur Längsrichtung (L) erhebt, wobei das Fahrzeug durch Verkuppeln einer Mehrzahl von Wagen (102, 104) gebildet ist, die jeweils ein Dach (105) umfassen und unter denen mindestens ein Wagen (102) ein Wagen ist, der gemäß einem der Ansprüche 1-3 definiert ist, **dadurch gekennzeichnet, dass** mindestens ein Wagen (102, 104) mindestens eine an dem Dach (150) dieses Wagens (102, 104) montierte Platte (106) aufweist, wobei jede Platte (106) eine Fläche (108), genannt Bremsfläche (108), aufweist und jede Platte (106) zwischen einer aufgerichteten Stellung, in der die Bremsfläche (108) der Platte (106) exponiert ist, um einen Luftwiderstand zu erzeugen, wenn das Bremsen erwünscht ist, und einer abgesenkten Stellung beweglich ist, in der die Platte (106) eingeklappt ist, um den Luftwiderstand zu verringern, wenn das Bremsen nicht gewünscht ist.

5. Schienenfahrzeug (100) nach Anspruch 4, bei dem jede Platte (106) um eine Querachse (R') senkrecht zu der Längsrichtung (L) und der Höhenrichtung (Z) des Fahrzeugs (102, 104) drehbeweglich ist.

6. Schienenfahrzeug (100) nach Anspruch 4 oder 5, bei dem die Bremsfläche (108) jeder Platte (106) in der aufgerichteten Stellung einen Winkel (a) mit dem Dach (105) des Fahrzeugs (102, 104) bildet, der zwischen 95° und 170° liegt.

7. Schienenfahrzeug (100) nach einem beliebigen der Ansprüche 4-6, bei dem jeder Wagen (102, 104) eine Mehrzahl von Platten (106, 107) umfasst, die erste Platten (106) und zweite Platten (107), unterschiedlich zu den ersten Platten (106) aufweist, wobei die ersten Platten (106) vorgesehen sind, in einer ersten Fahrrichtung (S1) des Schienenfahrzeug (100) verwendet zu werden und die zweiten Platten (107) vorgesehen sind, in einer zweiten Fahrrichtung (S2), unterschiedlich zu der ersten Fahrrichtung (S1) des Schienenfahrzeug (100), verwendet zu werden.

8. Schienenfahrzeug (100) nach einem beliebigen der Ansprüche 4-7, bei dem die aerodynamische Bremsvorrichtung (20) außerdem einen Betätigungsmechanismus, der in Funktionsverbindung der Klappe (40) zugeordnet ist, um die Klappe (40) zu öffnen und zu schließen, und eine Einheit zur Überwachung/Steuerung des Betätigungsmechanismus der Klappe (40) umfasst, wobei die Einheit zur Überwachung/Steuerung geeignet ist, ein Signal an den Betätigungsmechanismus zu senden, das den Wunsch des Bremsens des Fahrzeugs (100) angibt.

9. Schienenfahrzeug (100) nach einem beliebigen der Ansprüche 4-8, bei dem die aerodynamische Bremsvorrichtung (101) außerdem einen Betätigungsmechanismus, der in Funktionsverbindung den Platten (106) zugeordnet ist, um die Platten (106) aufzurichten und abzusenken, und eine Einheit zur Überwachung/Steuerung des Betätigungsmechanismus der Platten (106) umfasst, wobei die Einheit zur Überwachung/Steuerung geeignet ist, ein Signal an den Betätigungsmechanismus zu senden, das den Wunsch des Bremsens des Fahrzeugs (100) angibt.

10. Verfahren zum aerodynamischen Bremsen eines Wagens (10) eines Schienenfahrzeugs nach einem beliebigen der Ansprüche 1-3, wobei das Verfahren **dadurch gekennzeichnet ist, dass** es die folgenden Schritte umfasst:

- Bewegen des Wagens (10), bei dem die Klappe (40) in der geschlossenen Stellung ist, die die Frontseite (38) der Verkleidung (22) zur Luftablenkung verdeckt,
- Überführen der Klappe (40) von der geschlossenen Stellung in die Offenstellung und Exponieren der Frontseite (38) der Verkleidung (22) zur Luftablenkung, um einen Luftwiderstand zu erzeugen und das Fahrzeug (10) zu bremsen.

**Claims**

1. Railway vehicle car (10) comprising an aerodynamic braking device (20), the car (10) extending in a longitudinal direction (L) and rising in an elevation direction (Z) perpendicular to the longitudinal direction (L), the car (10) having a driver's cabin (12) which is situated at a first longitudinal end (16) of the car (10) and is delimited in the elevation direction (Z) by an upper portion (14), the aerodynamic braking device (20) comprising at least one air-deflecting fairing (22) mounted on the upper portion (14) of the driver's cabin (12),
the car being **characterised in that** the air-deflecting fairing (22) comprises walls (24) delimiting an interior volume (26) and an access opening (28) to the interior volume (26), one of the walls (24) forming a frontal surface (38) oriented towards the interior volume (26) and towards the first longitudinal end (16), the air-deflecting fairing (22) further comprising a flap (40) covering the access opening (28), the flap (40) being movable relative to said air-deflecting fairing (22) between an open position in which the frontal surface (38) of the air-deflecting fairing (22) is exposed in order to create an aerodynamic drag when braking is desired and a closed position in which the frontal surface (38) is concealed in order to reduce the drag when braking is not desired.

2. Railway vehicle car (10) according to claim 1, wherein the flap (40) is rotatable about a transverse axis (R) perpendicular to the longitudinal direction (L) and the elevation direction (Z) of the car (10).

3. Railway vehicle car (10) according to claim 1 or 2, wherein the frontal surface (38) forms an angle ($\delta$) with the upper portion (14) of between 90° and 170°, more particularly between 90° and 150°, more particularly between 95° and 150°.

4. Railway vehicle (100) comprising an aerodynamic braking device (20, 101), the railway vehicle (100) extending in a longitudinal direction (L) and rising in an elevation direction (Z) perpendicular to the longitudinal direction (L), the vehicle being formed by a coupling of a plurality of cars (102, 104) each comprising a roof (105) and of which at least one car (102) is a car as defined according to any one of claims 1 to 3,
being **characterised in that** at least one car (102, 104) has at least one panel (106) mounted on the roof (105) of that car (102, 104), each panel (106) having a surface (108) called a braking surface (108), each panel (106) being movable between a raised position in which the braking surface (108) of the panel (106) is exposed in order to create an aerodynamic drag when braking is desired and a lowered position in which the panel (106) is retracted in order to reduce the drag when braking is not desired.

5. Railway vehicle (100) according to claim 4, wherein each panel (106) is rotatable about a transverse axis (R') perpendicular to the longitudinal direction (L) and the elevation direction (Z) of the car (102, 104).

6. Railway vehicle (100) according to claim 4 or 5, wherein the braking surface (108) of each panel (106), in the raised position, forms an angle ($\alpha$) with the roof (105) of the car (102, 104) of between 95° and 170°.

7. Railway vehicle (100) according to any one of claims 4 to 6, wherein each car (102, 104) comprises a plurality of panels (106, 107) having first panels (106) and second panels (107) separate from the first panels (106), the first panels (106) being intended to be used in a first direction of travel (S1) of the railway vehicle (100) and the second panels (107) being intended to be used in a second direction of travel (S2) which is different from the first direction of travel (S1) of the railway vehicle (100).

8. Railway vehicle (100) according to any one of claims 4 to 7, wherein the aerodynamic braking device (20) further comprises an actuating mechanism operationally associated with the flap (40) for opening and closing the flap (40), and a control/command unit for the actuating mechanism of the flap (40), the control/command unit being capable of transmitting a signal to the actuating mechanism indicating the wish for braking of the vehicle (100).

9. Railway vehicle (100) according to any one of claims 4 to 8, wherein the aerodynamic braking device (101) further comprises an actuating mechanism operationally associated with the panels (106) for raising and lowering the panels (106), and a control/command unit for the actuating mechanism of the panels (106), the control/command unit being capable of transmitting a signal to the actuating mechanism indicating the wish for braking of the vehicle (100).

10. Method of aerodynamically braking a railway vehicle car (10) according to any one of claims 1 to 3, the method being **characterised in that** it comprises the following steps:

    - displacement of the car (10) in which the flap (40) is in the closed position concealing the frontal surface (38) of the air-deflecting fairing (22),
    - passage of the flap (40) from the closed position to the open position and exposure of the frontal surface (38) of the air-deflecting fairing (22) in order to create an aerodynamic drag and brake the car (10).

FIG.2

EP 3 406 495 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 202413841 U

- EP 2420425 A1